# EUROPEAN PATENT APPLICATION

(11) **EP 4 411 221 A1**
(43) Date of publication of application: **07.08.2024**
(21) Application number: 22876418.9
(22) Date of filing: 29.09.2022
(51) Int. Cl.: F23G 5/00, F23G 5/44, F23L 7/00

(54) **MELTING FURNACE AND METHOD FOR OPERATING MELTING FURNACE**

(30) Priority: 30.09.2021 JP 2021161338
(71) Applicant: KUBOTA CORPORATION, Osaka-shi, Osaka 556-8601 (JP)
(72) Inventor: INOUE, Shigenori, Amagasaki-shi, Hyogo 661-8567 (JP); HOSHO, Fumiki, Amagasaki-shi, Hyogo 661-8567 (JP)
(74) Representative: Betten & Resch
(86) International application number: PCT/JP2022/036358
(87) International publication number: WO 2023/054552

(57) **Abstract**

Provided is a melting furnace that enables each process of volatilization, processing into slag, and metallization to be appropriately performed depending on a type of a metal when melting a treatment target containing multiple types of metals in the furnace. The melting furnace includes: a furnace chamber where a treatment target containing multiple types of metals is fed from an upstream side and subjected to melt treatment from a surface thereof by a heating mechanism provided on a furnace ceiling, thereby generating molten slag which flows down to a downstream side; and a slag port which discharges the flowed down molten slag, the melting furnace including: multi-stage nozzles arranged along the upstream side to the downstream side of the furnace chamber; and an atmosphere control mechanism which controls to vary a type and/or composition of gas supplied from each of the nozzles to adjust an atmosphere near a molten surface to either an oxidizing atmosphere or a reducing atmosphere in each of a plurality of areas from the upstream side to the downstream side, thereby melting a target metal among the multiple types of metals as molten metal which is separable from the molten slag, or capturing the target metal in the molten slag as a metal compound.

## Description

### Technical Field

The present invention relates to a melting furnace and a method for operating a melting furnace.

### Background Art

Miscellaneous waste, such as organic sludge such as sewage sludge, livestock excreta, or methane fermentation residues from food waste; a combustible material such as plastic, paper, SRF (Solid Recovered Fuel), or recycling residues containing plastic and metal; and an incombustible material such as incinerated ash, contaminated soil, waste glass, waste pottery, or asbestos, is melt-treated as a treatment target in a melting furnace.

For example, the miscellaneous waste is melt-treated by a surface melting furnace including a furnace chamber in which a slag port is formed, and a treatment-target supply mechanism for supplying the treatment target toward the furnace chamber, the surface melting furnace configured to melt the treatment target supplied to the furnace chamber by the treatment-target supply mechanism from a surface thereof, and cause it to flow down to the slag port.

In such a melting furnace, the inside of the furnace is adjusted to a reducing atmosphere in order to volatilize heavy metals contained in the treatment target to remove them from slag.

In addition, Patent Literature 1 proposes a surface melting furnace that suppresses the volatilization of phosphorus contained in a treatment target during a melt-treatment. The surface melting furnace is configured to include: a furnace chamber in which a burner and an air supply mechanism are disposed and a slag port is formed; and a treatment-target supply mechanism for supplying the treatment target to the furnace chamber from a treatment-target container provided communicating with the furnace chamber. The treatment target contains phosphorus and a combustible material. The surface melting furnace includes an edge portion air-supply mechanism for supplying air toward a surface of the treatment target in the furnace chamber, the surface being adjacent to a portion in which the treatment-target container communicates with the furnace chamber.

According to the surface melting furnace, the air supplied from the edge portion air-supply mechanism toward the surface of the treatment target causes a fixed carbon content remaining on the portion adjacent to the surface of the treatment target due to the thermal decomposition of the combustible material to combust. The remainder of oxygen further suppresses reduction reactions of phosphorus compounds or phosphorus oxides, and thus suppresses the volatilization of phosphorus.

Patent Literature 2 proposes a method for melt-treating a phosphorus-containing material, including suppressing the volatilization of a phosphorus component contained in the phosphorus-containing material to exhaust gas, and capturing the phosphorus component in slag during the melt-treatment of the phosphorus-containing material such as sewage sludge. The method for melt-treating includes the following steps: a pretreatment step for adjusting a moisture content for the phosphorus-containing material containing 0.04 wt% or more phosphorus in dry substance equivalent; a melting step for supplying the phosphorus-containing material whose moisture content adjusted in the pretreatment step into a melting furnace to melt; and a cooling step for cooling and solidifying the slag produced by melting in the melting step.

The method for melt-treating further performs an iron compound adding step for adding divalent or trivalent iron compounds to the phosphorus-containing material in or before or after the pretreatment step, thereby preventing the volatilization of the phosphorus component contained in the phosphorus-containing material in the melting step, and also capturing the phosphorus component in the slag while suppressing the migration of the phosphorus component into metal phosphorus compounds, for example, iron phosphide.

When such a mixture of the divalent or trivalent iron compounds and the phosphorus-containing material are supplied into the melting furnace, the supplied ferrous oxide (FeO) or ferrous oxide (FeO) produced from the divalent or trivalent iron compounds in the melting process causes a melting point lowering effect. Therefore, for example, at a melting temperature of about 1300°C, a melting flow rate of 60% or more can be secured over a wider range than the preferred basicity of 0.4-0.8 of the phosphorus-containing material to iron, and the volatilization of phosphorus component in the material to be molten is suppressed so that phosphorus is captured in the slag in the form of non-metallic phosphorus compounds.

### Citation List

### Patent Literature

Patent Literature 1: Japanese Unexamined Patent Application Publication No. 2015-190701
Patent Literature 2: Japanese Unexamined Patent Application Publication No. 2015-033691

### Summary of Invention

### Technical Problem

Thus, a method for operating a melting furnace has been known, the method including adjusting a furnace atmosphere to an oxidizing atmosphere to suppress volatilization of metals or the like contained in a treatment target, or adding a melting auxiliary agent to suppress alloying of the metals or the like contained in the treatment target to capture them in slag.

Incidentally, it may be desired to separate and recover a specific metal contained in a treatment target from slag during melt treatment of the treatment target to use it as a recycled resource, while it may be desired to capture a specific metal contained in the treatment target in the slag.

For example, it may be desired to recover iron and nickel contained in a treatment target as metal. Conversely, it may be desired to capture iron and nickel in slag as compounds.

However, there has been a problem that multiple metals are contained in a treatment target, and thus the desired object cannot be achieved when uniformly adjusting an inside of a furnace to a certain oxidizing atmosphere or reducing atmosphere. For example, adjustment to a weakly reducing atmosphere is required to volatilize heavy metals contained in the treatment target, while adjustment to a strongly reducing atmosphere is required to recover nickel as molten metal in a separable state from molten slag. When not only heavy metals but also nickel are contained in the treatment target, it is impossible to process the treatment target by a conventional melting furnace.

An object of the present invention is to provide a melting furnace and a method for operating a melting furnace that enable each process of volatilization, processing into slag, and metallization to be appropriately performed depending on a type of a metal when melting a treatment target containing multiple types of metals in the furnace.

### Solution to Problem

To achieve the above object, a first feature configuration of a melting furnace according to the present invention is a melting furnace including: a furnace chamber where a treatment target containing multiple types of metals is fed from an upstream side and subjected to melt treatment from a surface thereof by a heating mechanism provided on a furnace ceiling, thereby generating molten slag which flows down to a downstream side; and a slag port which discharges the flowed down molten slag, the melting furnace including: multi-stage nozzles arranged along the upstream side to the downstream side of the furnace chamber; and an atmosphere control mechanism which controls to vary a type and/or composition of gas supplied from each of the nozzles to adjust an atmosphere near a molten surface to either an oxidizing atmosphere or a reducing atmosphere in each of a plurality of areas from the upstream side to the downstream side, thereby melting a target metal among the multiple types of metals as molten metal which is separable from the molten slag, or capturing the target metal in the molten slag as a metal compound.

As a result of adjusting the type and/or composition of the gas supplied from each of the multi-stage nozzles arranged along the upstream side to the downstream side of the furnace chamber, the atmosphere near the molten surface in each of a plurality of areas from the upstream side to the downstream side is adjusted to either the oxidizing atmosphere or the reducing atmosphere. In the area adjusted to the reducing atmosphere, the target metal turns into the molten metal which is separable from the molten slag, whereas in the area adjusted to the oxidizing atmosphere, the target metal is captured in the molten slag as the metal compound.

A second feature configuration of the same is, in addition to the first feature configuration described above, that the atmosphere control mechanism controls to adjust the atmosphere near the molten surface on the upstream side to a weakly reducing atmosphere to volatilize heavy metals among the multiple types of metals, and adjust the atmosphere near the molten surface on the downstream side to a strongly reducing atmosphere to melt the target metal among the multiple types of metals as the molten metal which is separable from the molten slag.

When the atmosphere near the molten surface on the upstream side of the treatment target fed into the furnace chamber is adjusted to the weakly reducing atmosphere, the heavy metals contained in the treatment target are reduced and then volatilized. Then, once the atmosphere near the molten surface on the downstream side is adjusted to the strongly reducing atmosphere, the target metal is melted as the molten metal which is separable from the molten slag. Accordingly, the heavy metals contained in the treatment target will never be mixed into the slag, and the target metal will be separated and recovered from the slag after the melt treatment.

A third feature configuration of the same is, in addition to the first feature configuration described above, that the atmosphere control mechanism controls to adjust the atmosphere near the molten surface on the upstream side to a weakly reducing atmosphere to volatilize heavy metals among the multiple types of metals, and adjust the atmosphere near the molten surface on the downstream side to the oxidizing atmosphere or the weakly reducing atmosphere to capture the target metal among the multiple types of metals in the molten slag as a metal compound.

When the atmosphere near the molten surface on the upstream side of the treatment target fed into the furnace chamber is adjusted to the weakly reducing atmosphere, the heavy metals contained in the treatment target are reduced and then volatilized. Then, once the atmosphere near the molten surface on the downstream side is adjusted to the oxidizing atmosphere or the weakly reducing atmosphere, the target metal is captured in the molten slag as the metal compound. Accordingly, the heavy metals contained in the treatment target will never be mixed into the slag, and the target metal will be recovered as the metal compound in a captured state in the slag after the melt treatment.

A fourth feature configuration of the same is, in addition to the first feature configuration described above, that the atmosphere control mechanism controls to adjust the atmosphere near the molten surface on the upstream side to the oxidizing atmosphere or a weakly reducing atmosphere to volatilize heavy metals among the multiple types of metals, and adjust the atmosphere near the molten surface on the downstream side to the weakly reducing atmosphere and further adjust temperature of the molten surface to 1400-1600°C, thereby melting the target metal among the multiple types of metals as the molten metal which is separable from the molten slag.

When the atmosphere near the molten surface on the upstream side of the treatment target fed into the furnace chamber is adjusted to the weakly reducing atmosphere, the heavy metals contained in the treatment target are reduced and then volatilized. Then, once the atmosphere near the molten surface on the downstream side is adjusted to the weakly reducing atmosphere and the temperature of the molten surface is adjusted to 1400-1600°C, gold, silver, copper or the like, for example, are recovered as the molten metal which is separable from the molten slag while suppressing reduction of iron and nickel.

A fifth feature configuration of the same is, in addition to any of the first to fourth feature configurations described above, that the melting furnace includes a rotary surface melting furnace, the rotary surface melting furnace including: an inner cylinder dividing the furnace chamber; an outer cylinder arranged around a periphery of the inner cylinder; a storage part for the treatment target formed between the inner cylinder and the outer cylinder; and the furnace chamber in which the treatment target, which is fed out of the storage part into the furnace chamber by relative rotation of the inner cylinder and the outer cylinder, is melt-treated from the surface of the treatment target, and the molten slag flows down to be discharged from the slag port formed at a center of a furnace floor, wherein the multi-stage nozzles arranged along the upstream side to the downstream side of the furnace chamber are disposed on the furnace ceiling or the furnace floor.

By arranging the multi-stage nozzles on the furnace ceiling or the furnace floor of the rotary surface melting furnace along the upstream side to the downstream side of the furnace chamber, it is possible to supply gas for adjusting the atmosphere to the molten surface of the treatment target.

A first feature configuration of a method for operating a melting furnace according to the present invention is a method for operating a melting furnace including: a furnace chamber where a treatment target containing multiple types of metals is fed from an upstream side and subjected to melt treatment from a surface thereof by a heating mechanism provided on a furnace ceiling, thereby generating molten slag which flows down to a downstream side; a slag port which discharges the flowed down molten slag; and multi-stage nozzles arranged along the upstream side to the downstream side of the furnace chamber, the method including: controlling to vary a type and/or composition of gas supplied from each of the nozzles to adjust an atmosphere near a molten surface to either an oxidizing atmosphere or a reducing atmosphere in each of a plurality of areas from the upstream side to the downstream side, thereby melting a target metal among the multiple types of metals as molten metal which is separable from the molten slag, or capturing the target metal in the molten slag as a metal compound.

### Advantageous Effects of Invention

As described above, the present invention can provide a melting furnace and a method for operating a melting furnace that enable each process of volatilization, processing into slag, and metallization to be appropriately performed depending on a type of a metal when melting a treatment target containing multiple types of metals in the furnace.

### Brief Description of Drawings

Fig. 1 is an illustrative diagram of a rotary surface melting furnace as one example of a melting furnace to which the present invention is applied.
Fig. 2A is an illustrative diagram of main parts, showing a melting furnace with nozzles arranged on a furnace ceiling, the nozzles adjusting a combustion atmosphere near a molten surface; Fig. 2B is an illustrative diagram of the main parts, showing another aspect in which some of the nozzles in Fig. 2A have a different shape; and Fig. 2C is an illustrative diagram showing the shape of the nozzle in an arrow A direction in Fig. 2B.
Fig. 3A is an illustrative diagram of main parts, showing a melting furnace with nozzles arranged on a furnace floor, the nozzles adjusting a combustion atmosphere near a molten surface, and Fig. 3B is an illustrative diagram of the main parts, showing another aspect of the melting furnace with the nozzles arranged on the furnace ceiling, the nozzles adjusting the combustion atmosphere near the molten surface.
Fig. 4 is an illustrative diagram of redox properties of metals contained in a treatment target based on oxygen partial pressure and a CO₂/CO ratio.
Figs. 5A and 5B are illustrative diagrams of a surface melting furnace, showing the other aspects of the melting furnace to which the present invention is applied.

### Best Mode for Carrying out the Invention

Hereinafter, embodiments of a melting furnace and a method for operating a melting furnace according to the present invention will be described.

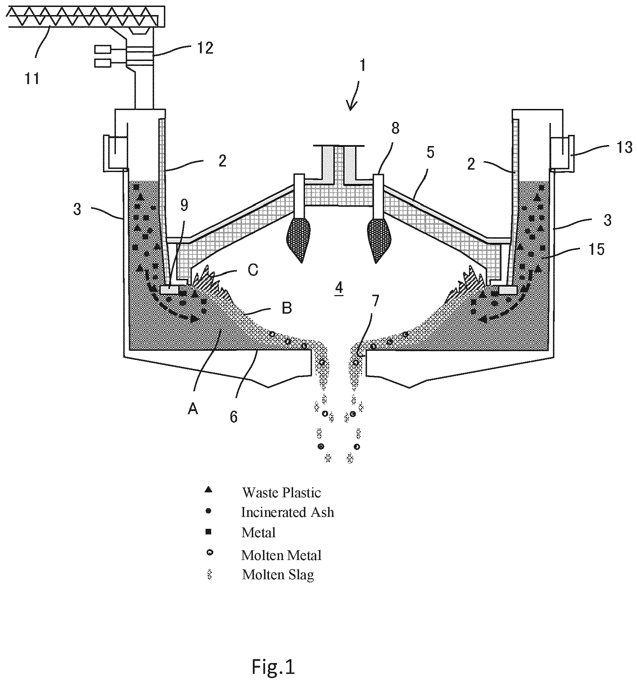

Fig. 1 shows a rotary surface melting furnace 1 as one example of a melting furnace. The surface melting furnace 1 is a furnace for melt-treating miscellaneous waste, and a treatment target thereof includes: organic sludge such as sewage sludge, livestock excreta, or methane fermentation residues from food waste; a combustible material such as plastic, paper, SRF (Solid Recovered Fuel), or recycling residues containing plastic and metal; an incombustible material such as incinerated ash, contaminated soil, waste glass, waste pottery, or asbestos; or the like. The metal includes useful metals such as iron, nickel, copper, silver, and gold, as well as heavy metals and the like. Although described below is a case in which the treatment target is a mixture of recycling residues containing plastic and metal and incinerated ash, other wastes may also be included.

The rotary surface melting furnace 1 includes an inner cylinder 2 and an outer cylinder 3 which are concentrically arranged, and a storage part 15 for the treatment target is formed between the inner cylinder 2 and the outer cylinder 3. A furnace ceiling 5 is provided inside the inner cylinder 2, and a furnace floor 6 is formed extending in a central direction from a lower part of the outer cylinder 3. A slag port 7 is formed at the center of the furnace floor 6. A furnace chamber 4 is formed in a space surrounded by the inner cylinder 2, the furnace ceiling 5, and the furnace floor 6, and the respective inner walls are covered with refractories. The inner cylinder 2 and the outer cylinder 3 are configured to be airtight with a water-sealing mechanism 13.

A screw-type conveyor mechanism 11 is provided to convey the treatment target to the storage part 15, and the treatment target is dropped and supplied into the storage part 15 via a double damper mechanism 12 to prevent outside air from flowing into the furnace chamber 4.

Rotation of the outer cylinder 3 relative to the inner cylinder 2 causes a feeding blade 9 provided on a lower part of the inner cylinder 2 to feed the treatment target stored in the storage part 15 into the furnace chamber 4, such that the treatment target is distributed in a mortar shape toward the slag port 7. The inside of the furnace is heated to a high temperature of about 1300°C by two combustion burners 8 provided at a central side of the furnace ceiling 5, such that the treatment target is melted from the surface thereof and flows down from an upstream side to the slag port 7 on a downstream side.

Combustible components, such as waste plastic, of the treatment target fed into the furnace chamber 4 are first vaporized on the upstream side and burned by gas. On this occasion, the upstream side has a weakly reducing atmosphere, and heavy metals contained in the treatment target are reduced and volatilized, and flow down together with exhaust gas to a secondary combustion chamber. The treatment target heated by radiant heat from the combustion burners 8 and the furnace ceiling 5 is melted from the surface thereof and flows down toward the slag port 7. On this occasion, thickness of a molten layer is several tens of millimeters. The sign A shown in Fig. 1 indicates an un-molten treatment target, the sign B indicates the molten layer, and the sign C indicates a gasified and burned section.

Fig. 1 illustrates diagrams indicating waste plastic, incinerated ash, and metal contained in the treatment target, as well as molten slag and molten metal. The treatment target is subjected to melt treatment in the furnace chamber 4 and turns into the molten slag and the molten metal, which drip down from the slag port 7.

A transport mechanism having a water tank for cooling the molten slag is arranged below the slag port 7, and the molten slag is discharged outside the furnace as granulated slag. In addition, combustion gas generated in the furnace chamber 4 is burned in the secondary combustion chamber provided on a downstream side of the slag port 7, purified in exhaust gas treatment equipment, and then discharged from a chimney to the air. The furnace chamber 4 is maintained at a negative pressure by an induced draft fan arranged on an upstream side of the chimney.

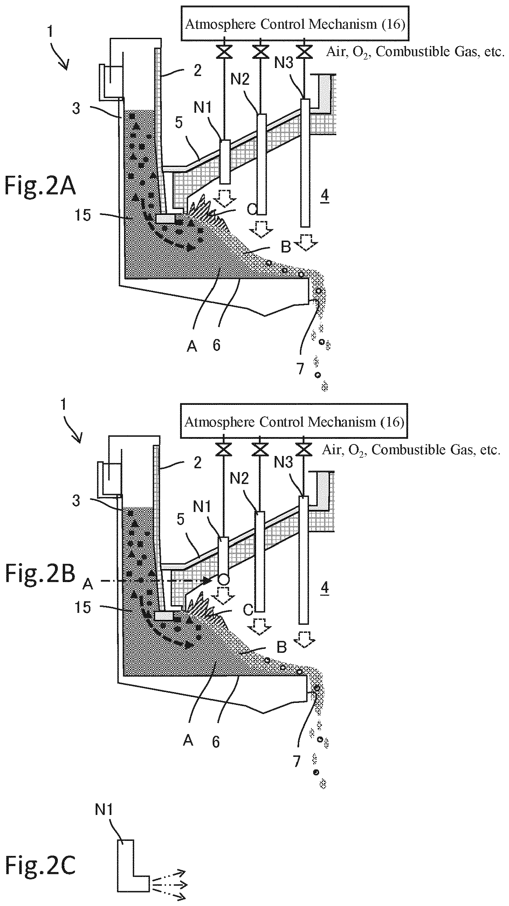

As shown in Fig. 2A, the furnace ceiling 5 has multi-stage nozzles N1, N2, N3 arranged at different distance along a radius direction of a circle centered at the slag port 7 from the upstream side (i.e. side of the storage part 15) to the downstream side (i.e. side of the slag port 7) of the furnace chamber 4. Each of the nozzles N1, N2, N3 is attached at predetermined intervals so as to be concentrically arranged in plan view.

Each of the nozzles N1, N2, N3 is arranged such that tips thereof are positioned near the molten surface, and is configured to allow an atmosphere near the molten surface to be adjusted to either an oxidizing atmosphere or a reducing atmosphere in each of a plurality of areas from the upstream side to the downstream side.

Accordingly, an atmosphere control mechanism 16 is provided to adjust a type and/or composition of gas supplied from each of the nozzles N1, N2, N3. The atmosphere control mechanism 16 is configured with a control mechanism which controls to supply gas from each of the nozzles N1, N2, N3, the gas having a different type and/or composition from any of air, oxygen, and combustible gas.

For example, vicinities of the molten surface on the tip side of the nozzle which supplies oxygen has an oxidizing atmosphere, whereas vicinities of the molten surface on the tip side of the nozzle which supplies combustible gas has a reducing atmosphere. By varying the type and/or composition of the gas, the atmosphere near the molten surface on the tip side of the nozzle is adjusted to a weakly reducing atmosphere, a strongly reducing atmosphere, a weakly oxidizing atmosphere, a strongly oxidizing atmosphere, or the like.

Since the gas supplied from each of the nozzles N1, N2, N3 is concentrically supplied to the molten surface as the outer cylinder 3 rotates, the vicinities along the upstream side to the downstream side can be adjusted to a different atmosphere.

Although the number of each of the nozzles N1, N2, N3 is not particularly limited, the number of the nozzle N1 on the most upstream side is greater than those of the nozzles N2, N3 on the inner side. Therefore, as shown in Figs. 2B-2C, when arranging an outlet of the nozzle N1 to be aligned with a rotation direction of the outer cylinder 3, in other words, a circumferential direction of the circle centered at the slag port 7, it is possible to reduce the installation number thereof.

As described above, each of the nozzles N1, N2, N3 is attached to the furnace ceiling 5 so as to be arranged concentrically at predetermined intervals in plan view, and has the atmosphere control mechanism which controls to adjust the atmosphere near the molten surface to either an oxidizing atmosphere or a reducing atmosphere in each of a plurality of areas from the upstream side to the downstream side, thereby melting a target metal among multiple types of metals as molten metal which is separable from the molten slag, or capturing the target metal in the molten slag as a metal compound.

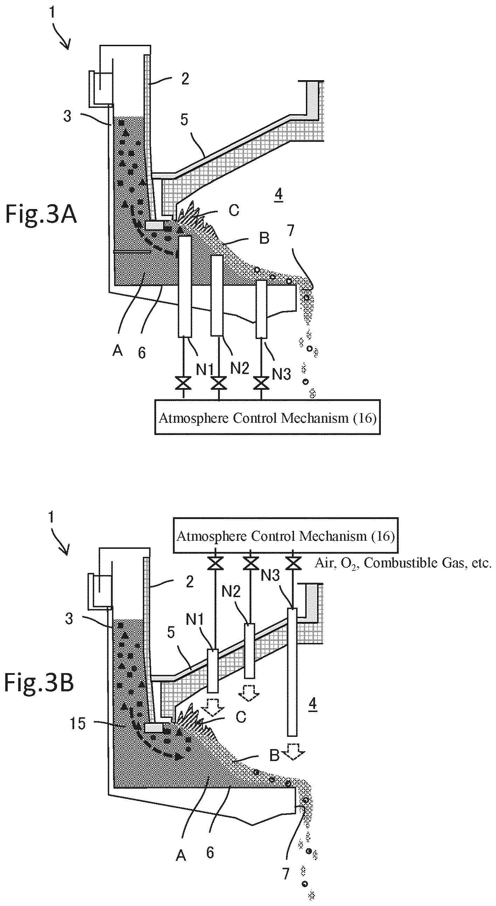

As shown in Fig. 3A, each of the nozzles N1, N2, N3 may be installed on the furnace floor 6 and arranged such that the tips thereof are positioned near the molten layer B of the treatment target. Note that in this aspect, it is necessary to cover around each of the nozzles N1, N2, N3 with refractories. If the furnace floor 6 rotates together with the outer cylinder 3, a configuration of piping for supplying the gas to each of the nozzles N1, N2, N3 will be complicated; therefore, the furnace floor 6 should be fixed.

As shown in Fig. 3B, among the three-stage nozzles N1, N2, N3 sequentially arranged from the upstream side to the downstream side of the furnace chamber 4, the middle nozzle N2 may be arranged such that the tip thereof is separated above from the molten surface. Additionally, each tip of the nozzles N1, N2, N3 arranged in a circumferential direction of the furnace ceiling 5 may be arranged at a different position between a position separated above from the molten surface and a position near the molten surface. For example, the position of each tip of the nozzles N1, N2, N3 may be arranged to alternate between the position separated above from the molten surface and the position near the molten surface. By employing such configuration, it is possible to simultaneously adjust control of an entire atmosphere in an inner space of the furnace chamber 4 and the atmosphere near the molten surface.

In an area adjusted to a reducing atmosphere by the atmosphere control mechanism 16, a metal to be treated (hereinafter simply referred to as "target metal") turns into molten metal which is separable from the molten slag. In an area adjusted to an oxidizing atmosphere, the target metal is captured in the molten slag as a metal compound.

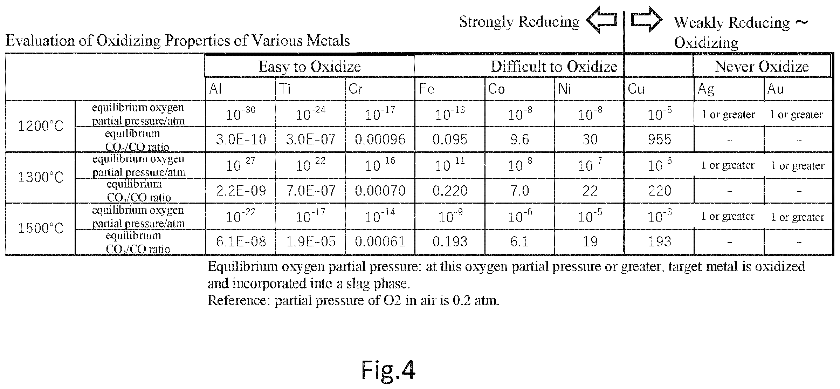

Fig. 4 shows redox properties regarding multiple types of target metals. Aluminum, titanium, and chromium belong to a group that is easy to oxidize; iron, cobalt, nickel, and copper belong to a group that is difficult to oxidize; and silver and gold belong to a group that never oxidizes. The table shows a list of oxygen partial pressure, a CO₂/CO ratio, and oxidizing properties of various metals (theoretical values), and it is understood that an atmosphere can be adjusted by measuring the oxygen partial pressure and the CO₂/CO ratio in the furnace chamber.

In this table, it can be seen that when temperature inside the furnace is 1300°C and the CO₂/CO ratio is equal to 100, copper is contained in the metal without being oxidized while nickel is oxidized and fixed on the slag side. Hereinafter, an atmosphere no less than the one in which nickel is reduced and melted as molten metal is referred to as "strongly reducing," and an atmosphere in which only up to copper is reduced is referred to as "weakly reducing to oxidizing."

When iron, nickel, cobalt, or the like are the target metal, the atmosphere control mechanism 16 adjusts the atmosphere near the molten surface on the upstream side to the weakly reducing to oxidizing atmosphere, preferably to the weakly reducing atmosphere, and volatilizes heavy metals among the multiple types of metals contained in the treatment target while maintaining other metals in a metal state and metal oxide in an oxide state.

When it is required to recover iron, nickel, cobalt, or the like as metal, the atmosphere control mechanism 16 controls to adjust the atmosphere near the molten surface on the downstream side to the strongly reducing atmosphere, and melt the target metal as the molten metal which is separable from the molten slag.

When it is not required to recover iron, nickel, cobalt, or the like as metal, the atmosphere control mechanism 16 controls to adjust the atmosphere near the molten surface on the downstream side to the weakly reducing to oxidizing atmosphere, preferably to the weakly reducing atmosphere, and capture the target metal in the molten slag as a metal compound (metal oxide).

When aluminum, chromium or the like are the target metal, the atmosphere control mechanism 16 adjusts the atmosphere near the molten surface on the upstream side to the weakly reducing to oxidizing atmosphere, preferably to the weakly reducing atmosphere, and volatilizes heavy metals among the multiple types of metals contained in the treatment target while maintaining other metals in a metal state and metal oxide in an oxide state.

When it is required to recover aluminum, chromium or the like as metal, the atmosphere control mechanism 16 controls to adjust the atmosphere near the molten surface on the downstream side to the strongly reducing atmosphere, and further apply combustion by the combustion burners at a low air ratio or blow combustible gas to cause reduction combustion to increase the degree of reduction, thereby melting the target metal as the molten metal which is separable from the molten slag. On this occasion, it is preferable to adjust the temperature inside the furnace to 1300°C, and the CO₂/CO ratio to be ≤ 0.0007.

When it is not required to recover aluminum, chromium or the like as metal, the atmosphere control mechanism 16 controls to adjust the atmosphere near the molten surface on the downstream side to the weakly reducing to oxidizing atmosphere, preferably to the weakly reducing atmosphere, and capture the target metal in the molten slag as a metal compound (metal oxide). On this occasion, unburned gas and oxygen for combustion are preferably supplied from the nozzles to maintain the temperature inside the furnace at 1300°C.

When gold, silver, copper, or the like are the target metal, the atmosphere control mechanism 16 adjusts the atmosphere near the molten surface on the upstream side to the weakly reducing to oxidizing atmosphere, preferably to the weakly reducing atmosphere, and volatilizes heavy metals among the multiple types of metals contained in the treatment target while maintaining other metals in a metal state and metal oxide in an oxide state.

When gold, silver, copper, or the like are to be recovered as metal, the atmosphere control mechanism 16 maintains the weakly reducing atmosphere near the molten surface on the downstream side and raises the temperature inside the furnace to 1400-1600°C. It applies combustion by the combustion burners at an adequate air ratio and blows combustible gas and oxygen gas from the nozzles. In this manner, it is possible to enhance a recovery rate of the metal by raising the temperature to lower the viscosity of the slag while suppressing reduction of iron or the like.

Granulated slag drips down from the slag port 7 as the molten metal together with the molten slag, is cooled in the water tank, and is discharged outside the furnace. By specific gravity separation of the granulated slag after pulverization, slag and metal are separated.

Although the present invention is described above with regard to the rotary surface melting furnace, the present invention is applicable to a melting furnace other than the rotary surface melting furnace.

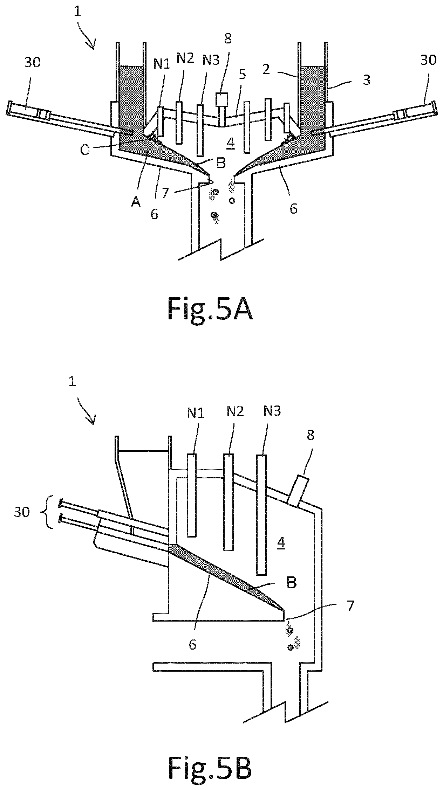

For example, as shown in Fig. 5A, the present invention is also applicable to the surface melting furnace 1 having the slag port 7 formed at the center of the furnace floor 6 and a plurality of push-in supply mechanisms 30 for supplying the treatment target disposed around the furnace floor 6. The surface melting furnace 1 is a type of a surface melting furnace in which both the outer cylinder 3 configured integrally with the furnace floor 6 and the inner cylinder 2 configured integrally with the furnace ceiling 5 are secured, and the push-in supply mechanisms 30 supply the treatment target into the furnace chamber.

Furthermore, as shown in Fig. 5B, the present invention is also applicable to the surface melting furnace 1 having the slag port 7 formed at an end of the furnace floor 6, and a plurality of push-in supply mechanisms 30 for supplying the treatment target disposed on the opposite side. In any of these surface melting furnaces 1, multi-stage nozzles are arranged such that the tips thereof are positioned near the molten surface from an upstream side toward a downstream side of the treatment target which is pushed into the furnace chamber 4.

As described above, the method for operating a melting furnace according to the present invention is a method for operating a melting furnace including: a furnace chamber where a treatment target containing multiple types of metals is fed from an upstream side and subjected to melt treatment from a surface thereof by a heating mechanism provided on a furnace ceiling, thereby generating molten slag which flows down to a downstream side; a slag port which discharges the flowed down molten slag; and multi-stage nozzles arranged along the upstream side to the downstream side of the furnace chamber, the method including: controlling to vary a type and/or composition of gas supplied from each of the nozzles to adjust an atmosphere near a molten surface to either an oxidizing atmosphere or a reducing atmosphere in each of a plurality of areas from the upstream side to the downstream side, thereby melting a target metal among the multiple types of metals as molten metal which is separable from the molten slag, or capturing the target metal in the molten slag as a metal compound.

In the embodiments described above, described is a case where self-combustible components such as waste plastic are contained in the treatment target. If suppressing the amount of air supplied from the nozzle N1 during the self-combustible components contained in the treatment target are being gasified and burned, suitable adjustment to the reducing atmosphere can be achieved. If no self-combustible components are contained in the treatment target, adjustment to the reducing atmosphere can be achieved by supplying combustible gas from the nozzle N1.

Each of the embodiments described above are only one example of the present invention. A specific configuration of each component can be modified and designed as appropriate to the extent that the operations and effects of the present invention can be obtained.

### Reference Signs List

- 1: Surface melting furnace
- 2: Inner cylinder
- 3: Outer cylinder
- 4: Furnace chamber
- 5: Furnace ceiling
- 6: Furnace floor
- 7: Slag port
- 8: Combustion burner
- 9: Feeding blade
- 15: Storage part
- A: Un-molten treatment target
- B: Molten layer on surface of treatment target
- C: Gasified and burned section

## Claims

1. A melting furnace comprising: a furnace chamber where a treatment target containing multiple types of metals is fed from an upstream side and subjected to melt treatment from a surface thereof by a heating mechanism provided on a furnace ceiling, thereby generating molten slag which flows down to a downstream side; and a slag port which discharges the flowed down molten slag, the melting furnace comprising:
multi-stage nozzles arranged along the upstream side to the downstream side of the furnace chamber; and
an atmosphere control mechanism which controls to vary a type and/or composition of gas supplied from each of the nozzles to adjust an atmosphere near a molten surface to either an oxidizing atmosphere or a reducing atmosphere in each of a plurality of areas from the upstream side to the downstream side, thereby melting a target metal among the multiple types of metals as molten metal which is separable from the molten slag, or capturing the target metal in the molten slag as a metal compound.

2. The melting furnace according to claim 1, wherein the atmosphere control mechanism controls to adjust the atmosphere near the molten surface on the upstream side to a weakly reducing atmosphere to volatilize heavy metals among the multiple types of metals, and adjust the atmosphere near the molten surface on the downstream side to a strongly reducing atmosphere to melt the target metal among the multiple types of metals as the molten metal which is separable from the molten slag.

3. The melting furnace according to claim 1, wherein the atmosphere control mechanism controls to adjust the atmosphere near the molten surface on the upstream side to a weakly reducing atmosphere to volatilize heavy metals among the multiple types of metals, and adjust the atmosphere near the molten surface on the downstream side to the oxidizing atmosphere or the weakly reducing atmosphere to capture the target metal among the multiple types of metals in the molten slag as the metal compound.

4. The melting furnace according to claim 1, wherein the atmosphere control mechanism controls to adjust the atmosphere near the molten surface on the upstream side to a weakly reducing atmosphere to volatilize heavy metals among the multiple types of metals, and adjust the atmosphere near the molten surface on the downstream side to the weakly reducing atmosphere and further adjust temperature of the molten surface to 1400-1600°C, thereby melting the target metal among the multiple types of metals as the molten metal which is separable from the molten slag.

5. The melting furnace according to any one of claims 1 to 4, comprising a rotary surface melting furnace, the rotary surface melting furnace comprising:
an inner cylinder dividing the furnace chamber;
an outer cylinder arranged around a periphery of the inner cylinder;
a storage part for the treatment target formed between the inner cylinder and the outer cylinder; and
the furnace chamber in which the treatment target, which is fed out of the storage part into the furnace chamber by relative rotation of the inner cylinder and the outer cylinder, is melt-treated from the surface of the treatment target, and the molten slag flows down to be discharged from the slag port formed at a center of a furnace floor,
wherein the multi-stage nozzles arranged along the upstream side to the downstream side of the furnace chamber are disposed on the furnace ceiling or the furnace floor.

6. A method for operating a melting furnace comprising: a furnace chamber where a treatment target containing multiple types of metals is fed from an upstream side and subjected to melt treatment from a surface thereof by a heating mechanism provided on a furnace ceiling, thereby generating molten slag which flows down to a downstream side; a slag port which discharges the flowed down molten slag; and multi-stage nozzles arranged along the upstream side to the downstream side of the furnace chamber, the method comprising:
controlling to vary a type and/or composition of gas supplied from each of the nozzles to adjust an atmosphere near a molten surface to either an oxidizing atmosphere or a reducing atmosphere in each of a plurality of areas from the upstream side to the downstream side, thereby melting a target metal among the multiple types of metals as molten metal which is separable from the molten slag, or capturing the target metal in the molten slag as a metal compound.
